# EUROPÄISCHE PATENTSCHRIFT

(11) **EP 3 359 826 B1**
(45) Veröffentlichungstag und Bekanntmachung des Hinweises auf die Patenterteilung: **24.07.2019**
(21) Anmeldenummer: 16778183.0
(22) Anmeldetag: 21.09.2016
(51) Int. Cl.: F16B 12/20, A47B 95/00, E05D 5/08

(54) **MÖBELBESCHLAG**
FURNITURE FITTING
FERRURE DE MEUBLE

(30) Priorität: 09.10.2015 AT 6552015
(43) Veröffentlichungstag der Anmeldung: 15.08.2018
(73) Patentinhaber: Julius Blum GmbH, 6973 Höchst (AT)
(72) Erfinder: REHBERG, Fabian, 09224 Chemnitz (DE)
(74) Vertreter: Torggler & Hofinger Patentanwälte
(86) Internationale Anmeldenummer: PCT/AT2016/060068
(87) Internationale Veröffentlichungsnummer: WO 2017/059471

(56) Entgegenhaltungen:
- EP-A1- 0 552 606
- EP-A1- 0 738 816
- WO-A1-2014/041498
- DE-A1- 2 806 735
- US-A- 5 715 577

## Beschreibung

Die vorliegende Erfindung bezieht sich auf einen Möbelbeschlag, umfassend:
- einen Flansch zur Anlage an einem Möbelteil,
- zumindest eine Befestigungsvorrichtung zur Befestigung des Möbelbeschlages mittels des Flansches am Möbelteil,
- wobei die Befestigungsvorrichtung zumindest zwei in einer Öffnung, insbesondere einer zylindrischen Bohrung, des Möbelteiles einsetzbare Befestigungselemente und zumindest ein drehbar gelagertes Arretierelement aufweist, wobei die zumindest zwei Befestigungselemente durch eine Drehung des Arretierelementes in einer ersten Drehrichtung ausgehend von einer Ausgangsstellung relativ zueinander und relativ zum Flansch bewegbar und damit in eine Spreizstellung drückbar sind, in welcher die zumindest zwei Befestigungselemente in der Öffnung des Möbelteiles arretierbar sind, und wobei die zumindest zwei Befestigungselemente durch eine Drehung des Arretierelementes in einer zweiten Drehrichtung von der Öffnung lösbar sind.

Im Weiteren betrifft die Erfindung eine Anordnung mit einem Möbelteil und mit einem Möbelbeschlag der zu beschreibenden Art.

Solche Möbelbeschläge sind beispielsweise aus der EP 0 698 357 B1 der Anmelderin bekannt und dienen dazu, den Möbelbeschlag ohne die Verwendung eines Werkzeuges an Möbelteilen zu montieren bzw. zu demontieren. Zur Montage wird zunächst ein Befestigungselement in Form eines Dübels in einer zylindrischen Bohrung eines Möbelteiles eingesetzt, woraufhin durch Drehen oder Kippen eines Beschlagkörpers ein Spreizteil für den Dübel bewegbar ist, sodass der Dübel in eine Spreizstellung aufgeweitet und damit innerhalb der Bohrung fixierbar ist. Zur Demontage des Möbelbeschlages wird der Beschlagkörper wieder zurückbewegt, sodass der Dübel eine Lösestellung einnimmt und damit aus der Bohrung herausziehbar ist. Diese Demontage des Möbelbeschlages wird aber häufig erschwert, weil der Dübel auch in der Lösestellung mit der Innenwandung der Bohrung in teilweisem Reibkontakt steht und damit das Herausziehen des Dübels aus der Bohrung behindert ist.

Weitere gattungsgemäße Möbelbeschläge sind aus der EP 0 552 606 A1, DE 28 06 735 A1, EP 0 738 816 A1, WO 2014/041498 A1 und der US 5,715,577 bekannt.

Aufgabe der vorliegenden Erfindung ist es daher, einen Möbelbeschlag der eingangs erwähnten Gattung unter Vermeidung des oben angeführten Nachteiles anzugeben.

Dies wird durch die Merkmale des Patentanspruchs 1 gelöst. Weitere vorteilhafte Ausführungen der Erfindung sind in den abhängigen Ansprüchen angegeben.

Gemäß der Erfindung ist also vorgesehen, dass die zumindest zwei Befestigungselemente durch wenigstens einen Kraftspeicher in Richtung der Ausgangsstellung vorgespannt sind, sodass die zumindest zwei Befestigungselemente durch eine Drehung des Arretierelementes in die zweite Drehrichtung aus der Spreizstellung in die Ausgangsstellung rückziehbar sind, wobei das Arretierelement um eine Drehachse drehbar gelagert ist und die zumindest zwei Befestigungselemente nur in einer rechtwinklig zur Drehachse des Arretierelementes verlaufenden Richtung linear verschiebbar gelagert sind.

Somit werden die zumindest zwei Befestigungselemente durch eine Drehung des Arretierelementes in die zweite Drehrichtung aktiv in die Ausgangsstellung zurückgezogen, sodass die Befestigungselemente in dieser kompakten Ausgangsstellung einen möglichst geringen gemeinsamen Durchmesser ausbilden und somit bei der Demontage des Möbelbeschlages leichter aus der Bohrung herausziehbar sind. Die Befestigungselemente können mit dem Arretierelement in beiden Drehrichtungen zwangsgeführt bzw. mechanisch bewegungsgekoppelt sein, sodass sich die zumindest zwei Befestigungselemente bei einer Verdrehung des Arretierelementes relativ zueinander bewegen.

Der zumindest eine Kraftspeicher kann beispielsweise ein Federelement in Form einer Schraubenfeder (insbesondere eine Zugfeder) oder in Form einer Federzunge aufweisen. Alternativ dazu kann der Kraftspeicher zumindest ein elastisches Band aufweisen, welches die zumindest zwei Befestigungselemente zumindest teilweise umschließt und dabei die Befestigungselemente in die kompakte Ausgangsstellung drückt.

Bei einem weiteren Ausführungsbeispiel kann vorgesehen sein, dass die zumindest zwei Befestigungselemente durch eine Drehung des Arretierelementes um weniger als 360°, vorzugsweise weniger als 180°, zwischen der Spreizstellung und der Ausgangsstellung verstellbar gelagert sind. Dies kann beispielsweise durch zumindest einen am Arretierelement angeordneten Gewindegang mit hoher Steigung (d.h. mit einer zwei- oder mehrfachen Steigung im Vergleich zu einem Regelgewinde) realisiert werden.

Gemäß einem Ausführungsbeispiel kann vorgesehen sein, dass die zumindest zwei Befestigungselemente am Möbelbeschlag linear verschiebbar gelagert sind und durch eine Drehung des Arretierelementes in die erste und/oder zweite Drehrichtung am Möbelbeschlag linear verschiebbar sind. Auch hier ergibt sich eine einfache Montage und Demontage des Möbelbeschlages, da die beiden Befestigungselemente in einer rechtwinklig zur Drehachse des Arretierelementes verlaufenden Richtung zwischen der Ausgangsstellung und der Spreizstellung linear verschiebbar gelagert sind und somit - ohne zu Verkippen - gleichmäßig gegen die Innenwandung der Öffnung des Möbelteiles drückbar und von dieser wegbewegbar sind. In der Spreizstellung der Befestigungselemente, in der diese in der Öffnung des Möbelteiles arretiert sind, wirkt die zum Kontakt mit der Öffnung vorgesehene Fläche der Befestigungselemente vollständig mit der Innenwandung der Öffnung zusammen. Somit steht eine vergrößerte Kontaktfläche der Befestigungselemente zur Verfügung, die an der Innenwandung der Öffnung anliegt, wobei die auftretenden Kräfte auf einen größeren Bereich verteilt werden und wobei Punkt- oder Linienkontakte mit hoher Flächenpressung vermieden sind. Auf diese Weise kann der Halt der Befestigungselemente in der Öffnung verbessert werden, insbesondere auch dann, wenn die Möbelteile mit dünner Wandstärke ausgeführt sind und/oder aus fasrigem Material, wie beispielsweise Spanplatten, bestehen.

Weitere Einzelheiten und Vorteile der Erfindung werden in der nachfolgenden Figurenbeschreibung erläutert. Dabei zeigt bzw. zeigen:
- Fig. 1a, 1b: ein Ausführungsbeispiel eines Möbelbeschlages in Form eines Möbelscharniers in einem Querschnitt, wobei sich die Befestigungselemente in einer Ausgangsstellung befinden, sowie eine vergrößerte Detaildarstellung hierzu,
- Fig. 2a, 2b: der Möbelbeschlag gemäß Fig. 1 mit den Befestigungselementen in einer Spreizstellung, sowie eine vergrößerte Detaildarstellung hierzu,
- Fig. 3: der Möbelbeschlag in einer Explosionsdarstellung,
- Fig. 4a, 4b: einen als Schubladenausziehführung ausgebildeten Möbelbeschlag in einer perspektivischen Ansicht sowie eine vergrößerte Detaildarstellung hierzu,
- Fig. 5a, 5b: einen als Stellantrieb für Möbelklappen ausgebildeten Möbelbeschlag in einer perspektivischen Ansicht sowie eine vergrößerte Detaildarstellung hierzu,
- Fig. 6a, 6b: einen als Halteplatte für ein Funktionsteil ausgebildeten Möbelbeschlag in zwei verschiedenen perspektivischen Ansichten.

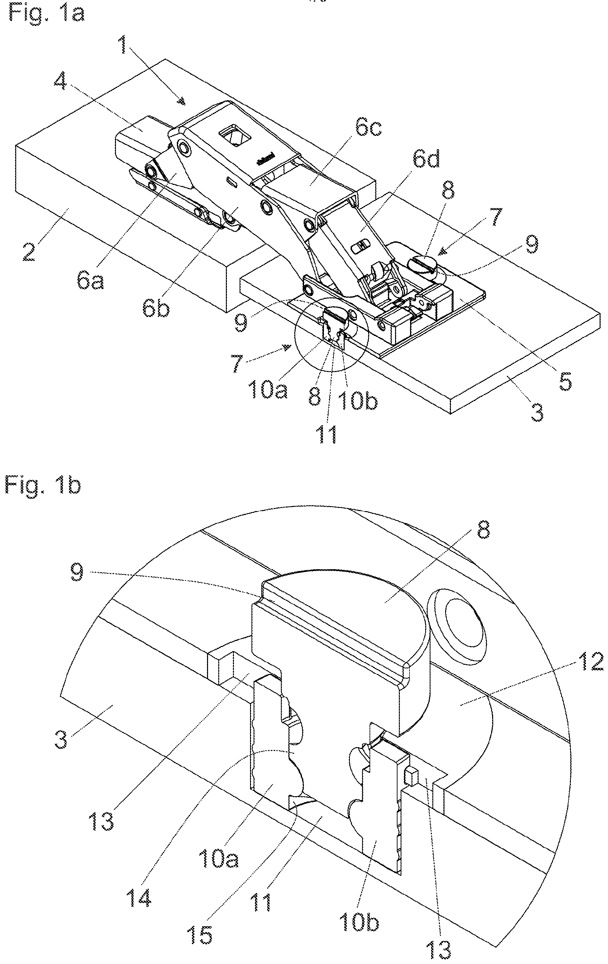

Fig. 1a zeigt einen perspektivischen Querschnitt eines Möbelbeschlages 1 in Form eines Möbelscharniers, welches als Weitwinkelscharnier mit sieben Gelenkachsen ausgebildet ist. Der Möbelbeschlag 1 umfasst ein an einem Möbelkorpus 2 zu befestigendes erstes Anschlagteil 4 und ein an einem bewegbaren Möbelteil 3 zu befestigendes zweites Anschlagteil 5, wobei das erste Anschlagteil 4 und das zweite Anschlagteil 5 über mehrere Gelenkhebel 6a, 6b, 6c, 6d miteinander schwenkbar verbunden sind. Zur Befestigung des zweiten Anschlagteiles 5 am bewegbaren Möbelteil 3 sind zwei Befestigungsvorrichtungen 7 vorgesehen, welche identisch ausgebildet sind und anhand derer die Erfindung erläutert werden soll.

Die Befestigungsvorrichtungen 7 umfassen jeweils ein um eine Drehachse drehbar gelagertes Arretierelement 8 (beispielsweise in Form einer Schraube), wobei die Arretierelemente 8 jeweils mit einer Werkzeugaufnahme 9 zum Verdrehen des Arretierelementes 8 versehen sind. Im bewegbaren Möbelteil 3 ist eine Öffnung 11, insbesondere eine zylindrische Bohrung, vorgebohrt, in der zumindest zwei Befestigungselemente 10a, 10b eingesetzt sind und die durch eine Drehung des Arretierelementes 8 in einer ersten Drehrichtung ausgehend von einer Ausgangsstellung relativ zueinander bewegbar und damit in eine Spreizstellung drückbar sind, in welcher die zumindest zwei Befestigungselemente 10a, 10b in der Öffnung 11 des Möbelteiles 3 arretierbar sind, und wobei die zumindest zwei Befestigungselemente 10a, 10b durch eine Drehung des Arretierelementes 8 in einer zweiten Drehrichtung in die Ausgangsstellung rückziehbar und damit von der Öffnung 11 lösbar sind. In der gezeigten Figur befinden sich die Befestigungselemente 10a, 10b in der Ausgangsstellung, in der die Befestigungselemente 10a, 10b aus der Öffnung 11 des Möbelteiles 3 herausziehbar sind.

Fig. 1b zeigt den in Fig. 1a eingekreisten Bereich in einer vergrößerten Ansicht. Der Möbelbeschlag 1 weist einen Flansch 12 zur Anlage am Möbelteil 3 auf, wobei zumindest eine, vorzugsweise am Flansch 12 angeordnete, Führung 13 zur linear verschiebbaren Lagerung der Befestigungselemente 10a, 10b vorgesehen ist, welche durch eine Verdrehung des Arretierelementes 8 in einer rechtwinklig zur Drehachse des Arretierelementes 8 verlaufenden Richtung entlang dieser Führung 10 verschiebbar gelagert sind. Das Arretierelement 8 ist mit zumindest einem schraubenförmigen Gewindegang 14 versehen, welcher mit einem an den Befestigungselementen 10a, 10b angeordneten Gegengewinde 15 zusammenwirkt.

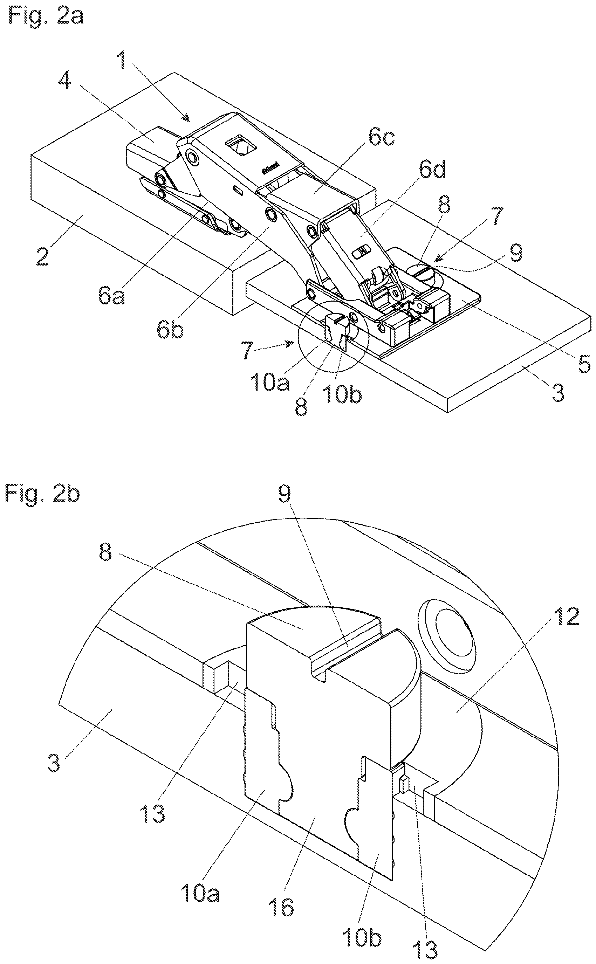

Fig. 2a zeigt den Möbelbeschlag 1, wobei sich die beiden Befestigungselemente 10a, 10b in einer Spreizstellung befinden, in der die beiden Befestigungselemente 10a, 10b in der Öffnung 11 (Fig. 1b) des bewegbaren Möbelteiles 3 arretiert sind. Ausgehend von der in Fig. 1b gezeigten Stellung wurden die beiden Befestigungselemente 10a, 10b durch eine Drehung des Arretierelementes 8 in einer ersten Drehrichtung ausgehend von der Ausgangsstellung in entgegengesetzten Richtungen relativ zueinander bewegt und damit in eine Spreizstellung gedrückt. Die beiden Befestigungselemente 10a, 10b sind am Möbelbeschlag 1 entlang der Führung 10 linear verschiebbar gelagert und sind durch eine Drehung des Arretierelementes 8 in die erste und/oder zweite Drehrichtung entlang der Führung 10 linear verschiebbar gelagert. Zur Verdrehung des Arretierelementes 8 kann eine Werkzeugaufnahme 9 für einen Schraubendreher vorgesehen sein, alternativ ist es auch möglich, dass das Arretierelement 8 zur Handbetätigung ausgebildet ist (beispielsweise über einen manuell zu betätigenden Schwenkhebel). Ausgehend von der in Fig. 2b gezeigten Spreizstellung, in der die beiden Befestigungselemente 10a, 10b jeweils flächig an der Innenwandung der Öffnung 11 anliegen, sind die Befestigungselemente 10a, 10b durch Drehung des Arretierelementes 8 in die entgegengesetzte, zweite Drehrichtung wieder in die in Fig. 1b gezeigte Ausgangsstellung rückziehbar. Im gezeigten Ausführungsbeispiel steht das Arretierelement 8 mit den beiden Befestigungselementen 10a, 10b über ein Kegelgewinde 16 in Verbindung. Dabei kann vorgesehen sein, dass das Kegelgewinde 16 eine derartige Steigung aufweist, dass die zumindest zwei Befestigungselemente 10a, 10b durch eine Drehung des Arretierelementes 8 um weniger als 360°, vorzugsweise weniger als 180°, ausgehend von der Spreizstellung in die Ausgangsstellung (bzw. auch in die umgekehrte Richtung) bewegbar sind. Um ein unbeabsichtigtes Lösen der Spreizstellung zu verhindern, kann das Arretierelement 8 auch durch eine (hier nicht gezeigte) lösbare Rastvorrichtung gesichert sein.

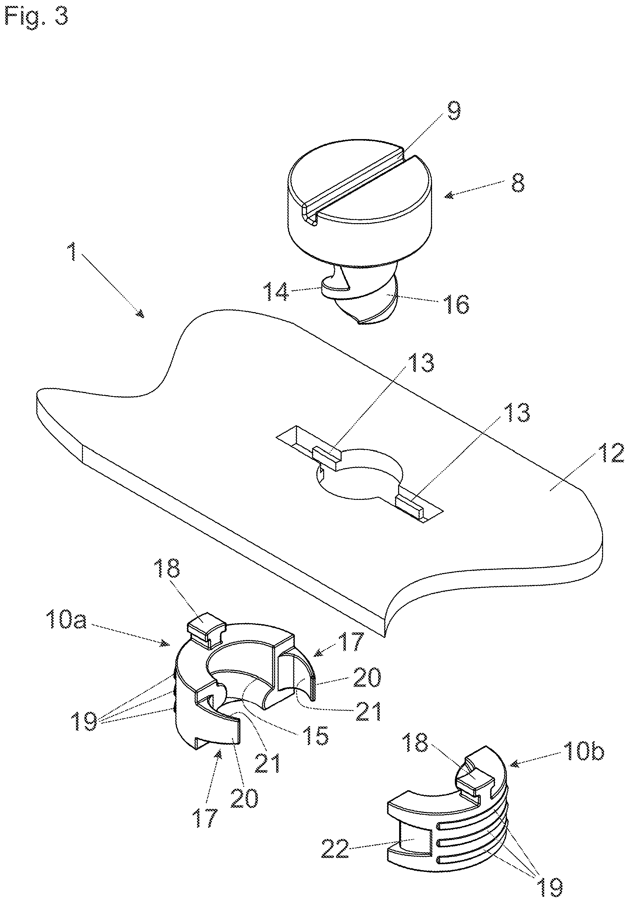

Fig. 3 zeigt den Möbelbeschlag 1 in einer Explosionsdarstellung. Am Flansch 12 des Möbelbeschlages 1 ist eine Führung 13 zur linear verschiebbaren Lagerung der zumindest zwei Befestigungselemente 10a, 10b angeordnet, die durch eine Drehung des Arretierelementes 8 entlang der Führung 13 in gegensinnigen Richtungen verschiebbar gelagert sind. Das Kegelgewinde 16 des Arretierelementes 8 weist zumindest einen schraubenförmigen Gewindegang 14 auf, der mit einem korrespondierenden Gegengewinde 15 der Befestigungselemente 10a, 10b in Eingriff steht. Zur federunterstützten Rückziehbewegung der Befestigungselemente 10a, 10b in die Ausgangsstellung ist zumindest eine Kraftspeicher 17 vorgesehen, durch den die Befestigungselemente 10a, 10b in Richtung der Ausgangsstellung vorgespannt sind. Im gezeigten Ausführungsbeispiel ist der Kraftspeicher 17 durch zwei am ersten Befestigungselement 10a angeordnete Federzungen 20 gebildet, die mit dem zweiten Befestigungselement 10b in Eingriff stehen. Die beiden Federzungen 20 des ersten Befestigungselementes 10a umgreifen also das zweite Befestigungselement 10b, wobei in der Ausgangsstellung eine konkave Kontur 21 der Federzungen 20 jeweils an einer konvexen Gegenkontur 22 des zweiten Befestigungselementes 10b anliegt. Durch eine Drehung des Arretierelementes 8 in die erste Drehrichtung werden die beiden Befestigungselemente 10a, 10b voneinander weg bewegt, sodass die Federzungen 20 entgegen ihrer federnden Wirkung aufweitbar sind. Bei einer Drehung des Arretierelementes 8 in die zweite, entgegengesetzte Drehrichtung werden die beiden Befestigungselemente 10 durch die Kraft der sich entspannenden Federzungen 20 wieder zusammengezogen und damit wieder in die Ausgangsstellung gedrückt, in der die Befestigungselemente 10a, 10b praktisch ohne Reibwiderstand aus der Öffnung 11 des Möbelteiles 3 herausgezogen werden können. Zur Verbesserung der Haltekraft in der Spannstellung können die als Halbschalen ausgebildeten Befestigungselemente 10a, 10b an ihrer mit dem Kontakt mit der Öffnung 11 des Möbelteiles 3 vorgesehenen, bogenförmigen Fläche zumindest eine oder mehrere Halterippen 19 aufweisen. Die Halterippen 19 sind dabei - in Bezug auf die Längsrichtung des Arretierelementes 8 - voneinander beabstandet an den Befestigungselementen 10a, 10b angeordnet oder ausgebildet.

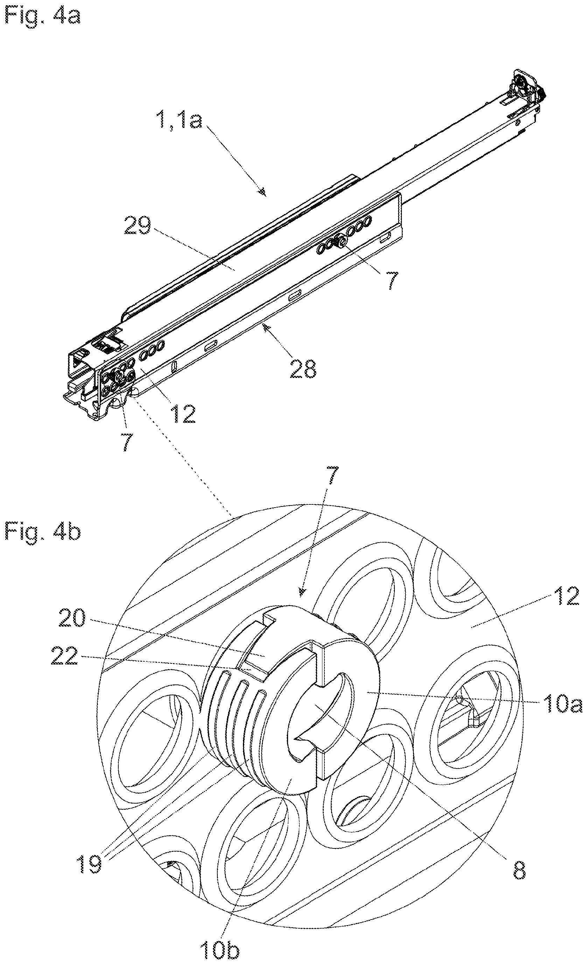

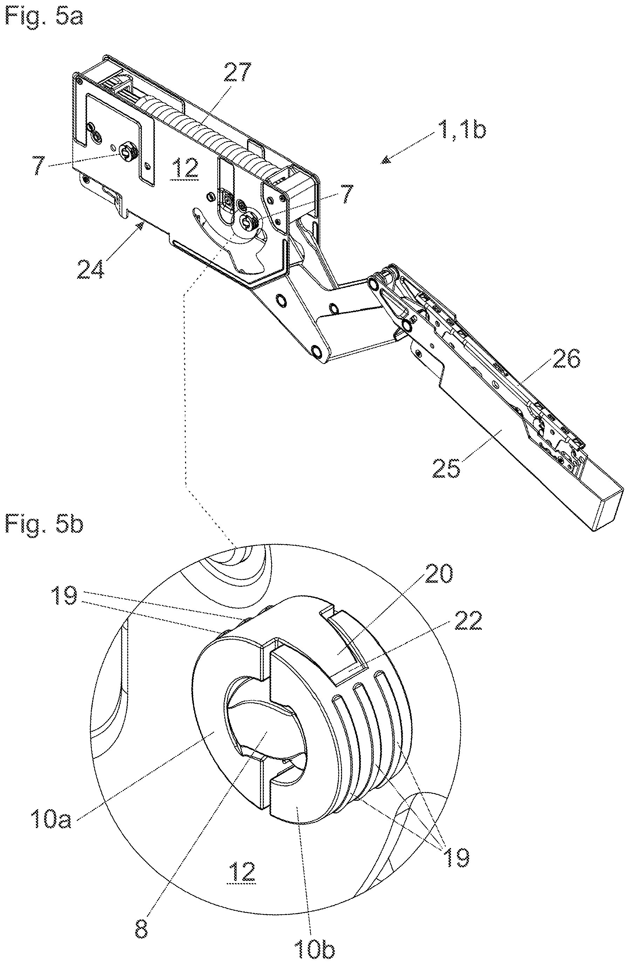

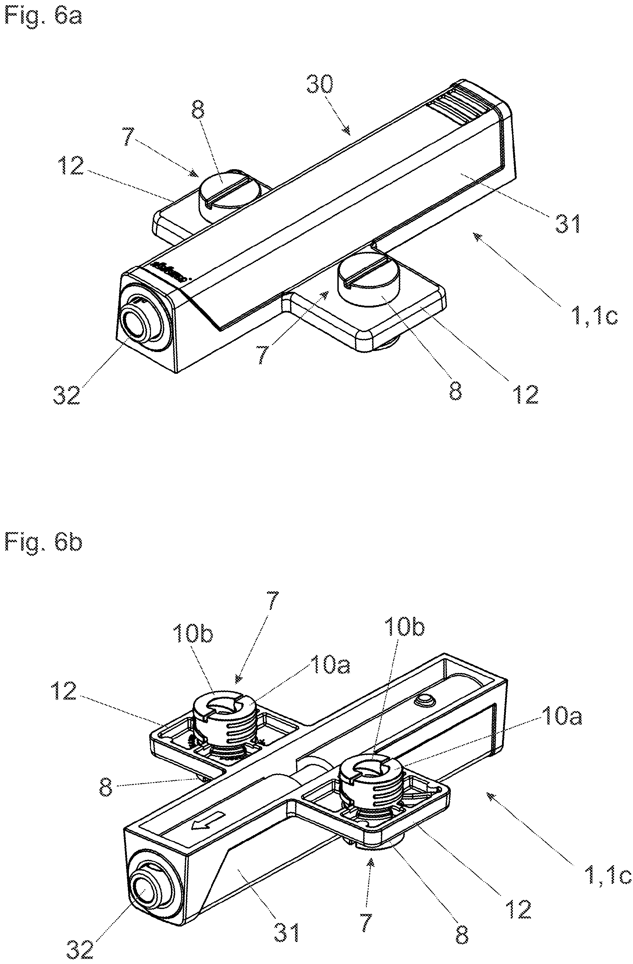

In den gezeigten Figuren wurde der erfindungsgemäße Möbelbeschlag 1 anhand eines Möbelscharniers erläutert. Es ist allerdings unmittelbar einsichtig, dass der Möbelbeschlag 1 auch alternativ ausgebildet sein kann, nämlich als Schubladenausziehführung 1a (Fig. 4a, 4b), als Stellantrieb 1b (Fig. 5a, 5b) für Möbelklappen oder auch als Haltevorrichtung 1c (Fig. 6a, 6b) für ein Funktionsteil 23, vorzugsweise eine Dämpfvorrichtung zum Dämpfen einer Bewegung eines bewegbaren Möbelteiles 3 und/oder eine Antriebsvorrichtung zum Bewegen eines bewegbaren Möbelteiles 3, so wie es in den nachfolgenden Figuren gezeigt und beschrieben ist.

Fig. 4a zeigt einen Möbelbeschlag 1, welcher als Schubladenausziehführung 1a zur verfahrbaren Lagerung einer Schublade relativ zu einem Möbelkorpus ausgebildet ist. Die Schubladenausziehführung 1a umfasst eine am Möbelkorpus zu befestigende Korpusschiene 28 und zumindest eine Ladenschiene 29, welche relativ zur Korpusschiene 28 verfahrbar gelagert ist. Die Korpusschiene 28 umfasst einen Flansch 12, an welchem zwei oder mehrere Befestigungsvorrichtungen 7 angeordnet sein können. Fig. 4b zeigt die vordere Befestigungsvorrichtung 7 in einer vergrößerten Ansicht, wobei die beiden Befestigungselemente 10a, 10b durch eine Drehung des Arretierelementes 8 ausgehend von der kompakten Ausgangsstellung in die Spreizstellung bewegbar sind, in welcher die beiden Befestigungselemente 10a, 10b in einer der zylindrischen Öffnung 11 des Möbelkorpus arretierbar sind.

Fig. 5a zeigt einen Möbelbeschlag 1, welcher als Stellantrieb 1b für Möbelklappen ausgebildet ist. Der Stellantrieb 1b weist ein Gehäuse 24 auf, in welchem eine Federvorrichtung 27 zur Kraftbeaufschlagung eines schwenkbar gelagerten Stellarmes 25 aufgenommen ist. Der Stellarm 25 ist mit einem an der Möbelklappe zu befestigenden Halteteil 26 lösbar verrastbar. Der Flansch 12 ist im gezeigten Ausführungsbeispiel von einer am Möbelkorpus anlegbaren Seitenwand des Gehäuses 24 gebildet. An diesem Flansch 12 sind zwei oder mehrere Befestigungsvorrichtungen 7 angeordnet. Fig. 5b zeigt die vordere Befestigungsvorrichtung 7 in einer vergrößerten Ansicht, wobei die Befestigungselemente 10a, 10b durch eine Drehung des Arretierelementes 8 in eine erste Drehrichtung aufspreizbar und durch eine Drehung in die zweite Drehrichtung durch die Kraft des Kraftspeicher 17 (hier durch die Eigenelastizität der Federzungen 20) wieder in die kompakte Ausgangsstellung rückziehbar sind.

Fig. 6a zeigt eine perspektivische Ansicht eines Möbelbeschlages 1, welcher als Halteplatte 1c für ein Funktionsteil 30, beispielsweise als Dämpfvorrichtung zum Dämpfen einer Bewegung des bewegbaren Möbelteiles 3 ausgebildet ist. Die Dämpfvorrichtung umfasst ein Gehäuse 31, in welchem wenigstens eine Fluidkammer angeordnet oder ausgebildet ist, wobei ein Stößel 32 relativ zum Gehäuse 31 verschiebbar gelagert ist. Der Stößel 32 ist durch das bewegbare Möbelteil 3 beaufschlagbar, wobei eine Bewegung des Stößels 32 (und damit jene des bewegbaren Möbelteiles 3) durch den Widerstand eines, vorzugsweise hydraulischen, Dämpfungsfluides abbremsbar ist. In der gezeigten Figur befindet sich der Stößel 32 in einer eingedrückten Endstellung. Die Halteplatte 1c weist zwei Flansche 12 mit daran angeordneten Befestigungsvorrichtungen 7 auf, durch welche die Halteplatte 1c an einem Möbelteil 3 zu befestigen ist. Fig. 6b zeigt die in Fig. 6a gezeigte Halteplatte 1c in einer Ansicht von unten. Anstelle der Dämpfvorrichtung kann das Funktionsteil 30 auch als Antriebsvorrichtung zum Bewegen des bewegbaren Möbelteiles 3 ausgebildet sein, beispielsweise in Form einer an sich bekannten Touch-Latch-Vorrichtung.

## Patentansprüche

1. Möbelbeschlag (1), umfassend:
- einen Flansch (12) zur Anlage an einem Möbelteil (3),
- zumindest eine Befestigungsvorrichtung (7) zur Befestigung des Möbelbeschlages (1) mittels des Flansches (12) am Möbelteil (3),
- wobei die Befestigungsvorrichtung (7) zumindest zwei in einer Öffnung (11), insbesondere einer zylindrischen Bohrung, des Möbelteiles (3) einsetzbare Befestigungselemente (10a, 10b) und zumindest ein drehbar gelagertes Arretierelement (8) aufweist, wobei die zumindest zwei Befestigungselemente (10a, 10b) durch eine Drehung des Arretierelementes (8) in einer ersten Drehrichtung ausgehend von einer Ausgangsstellung relativ zueinander und relativ zum Flansch (12) bewegbar und damit in eine Spreizstellung drückbar sind, in welcher die zumindest zwei Befestigungselemente (10a, 10b) in der Öffnung (11) des Möbelteiles (3) arretierbar sind, und wobei die zumindest zwei Befestigungselemente (10a, 10b) durch eine Drehung des Arretierelementes (8) in einer zweiten Drehrichtung von der Öffnung (11) lösbar sind,
**dadurch gekennzeichnet, dass** die zumindest zwei Befestigungselemente (10a, 10b) durch wenigstens einen Kraftspeicher (17) in Richtung der Ausgangsstellung vorgespannt sind, sodass die zumindest zwei Befestigungselemente (10a, 10b) durch eine Drehung des Arretierelementes (8) in die zweite Drehrichtung aus der Spreizstellung in die Ausgangsstellung rückziehbar sind, wobei das Arretierelement (8) um eine Drehachse drehbar gelagert ist und dass die zumindest zwei Befestigungselemente (10a, 10b) nur in einer rechtwinklig zur Drehachse des Arretierelementes (8) verlaufenden Richtung linear verschiebbar gelagert sind.

2. Möbelbeschlag nach Anspruch 1, **dadurch gekennzeichnet, dass** die zumindest zwei Befestigungselemente (10a, 10b) am Möbelbeschlag (1) linear verschiebbar gelagert sind und durch eine Drehung des Arretierelementes (8) in die erste und/oder zweite Drehrichtung am Möbelbeschlag (1) linear verschiebbar sind.

3. Möbelbeschlag nach Anspruch 1 oder 2, **dadurch gekennzeichnet, dass** die zumindest zwei Befestigungselemente (10a, 10b) durch eine Drehung des Arretierelementes (8) um weniger als 360°, vorzugsweise weniger als 180°, zwischen der Spreizstellung und der Ausgangsstellung verstellbar gelagert sind.

4. Möbelbeschlag nach einem der Ansprüche 1 bis 3, **dadurch gekennzeichnet, dass** der Kraftspeicher (17) zumindest eine an einem ersten Befestigungselement (10a) angeordnete Federzunge (20) aufweist, welche mit dem zweiten Befestigungselement (10b) in Eingriff steht.

5. Möbelbeschlag nach Anspruch 4, **dadurch gekennzeichnet, dass** am ersten Befestigungselement (10a) zwei Federzungen (20) angeordnet sind, welche das zweite Befestigungselement (10b) umgreifen.

6. Möbelbeschlag nach Anspruch 5, **dadurch gekennzeichnet, dass** die Federzungen (20) jeweils eine konkave Kontur (21) aufweisen, welche in der Ausgangsstellung jeweils an einer konvexen Gegenkontur (22) des zweiten Befestigungselementes (10b) anliegen.

7. Möbelbeschlag nach einem der Ansprüche 1 bis 6, **dadurch gekennzeichnet, dass** das Arretierelement (8) mit den zumindest zwei Befestigungselementen (10a, 10b) über ein Kegelgewinde (16) in Verbindung steht.

8. Möbelbeschlag nach Anspruch 7, **dadurch gekennzeichnet, dass** das Kegelgewinde (16) zumindest einen am Arretierelement (8) angeordneten, schraubenförmigen Gewindegang (14) aufweist, welcher mit einem an den Befestigungselementen (10a, 10b) angeordneten Gegengewinde (15) zusammenwirkt.

9. Möbelbeschlag nach einem der Ansprüche 1 bis 8, **dadurch gekennzeichnet, dass** der Möbelbeschlag (1) zumindest eine Führung (13) zur linear verschiebbaren Lagerung der Befestigungselemente (10a, 10b) aufweist.

10. Möbelbeschlag nach Anspruch 9, **dadurch gekennzeichnet, dass** die Befestigungselemente (10a, 10b) jeweils zumindest ein Führungselement (18) aufweisen, welche entlang der Führung (13) des Möbelbeschlages (1) geführt sind.

11. Möbelbeschlag nach einem der Ansprüche 1 bis 10, **dadurch gekennzeichnet, dass** die zumindest zwei Befestigungselemente (10a, 10b) als Halbschalen ausgebildet sind.

12. Möbelbeschlag nach einem der Ansprüche 1 bis 11, **dadurch gekennzeichnet, dass** die zumindest zwei Befestigungselemente (10a, 10b) an ihrer mit dem Kontakt mit der Öffnung (11) des Möbelteiles (3) vorgesehenen Fläche zumindest eine oder mehrere Halterippen (19) aufweisen.

13. Möbelbeschlag nach einem der Ansprüche 1 bis 12, **dadurch gekennzeichnet, dass** das Arretierelement (8) eine Werkzeugaufnahme (9) zum Verdrehen des Arretierelementes (8) aufweist.

14. Möbelbeschlag nach einem der Ansprüche 1 bis 13, **dadurch gekennzeichnet, dass** der Möbelbeschlag (1) als Möbelscharnier, als Schubladenausziehführung (1a), als Stellantrieb (1b) für Möbelklappen oder als Halteplatte (1c) für ein Funktionsteil (30), vorzugsweise eine Dämpfvorrichtung zum Dämpfen einer Bewegung eines bewegbaren Möbelteiles (3) und/oder eine Antriebsvorrichtung zum Bewegen eines bewegbaren Möbelteiles (3), ausgebildet ist.

15. Anordnung mit einem Möbelteil und mit einem Möbelbeschlag nach einem der Ansprüche 1 bis 14, **dadurch gekennzeichnet, dass** das Möbelteil (3) eine Öffnung (11) in Form einer zylindrischen Bohrung aufweist, in welcher die zumindest zwei Befestigungselemente (10a, 10b) einsetzbar und darin lösbar arretierbar sind.

## Claims

1. A furniture fitting (1), comprising:
- a flange (12) configured to rest against a furniture part (3),
- at least one fastening device (7) for fixing the furniture fitting (1) to the furniture part (3) via the flange (12),
- wherein the fastening device (7) includes at least two fastening elements (10a, 10b) configured to be inserted into an opening (11), in particular into a cylindrical bore, of the furniture part (3), and at least one pivotally mounted arresting element (8), wherein the at least two fastening elements (10a, 10b) can be moved, by pivoting the arresting element (8) in a first pivoting direction, starting from an initial position relative to one another and relative to the flange (12) and therewith into an expanded position in which the two fastening elements (10a, 10b) can be arrested within the opening (11) of the furniture part (3), and wherein the at least two fastening elements (10a, 10b), by pivoting the arresting element (8) in a second pivoting direction, can be released from the opening (11),
**characterized in that** the at least two fastening elements (10a, 10b) are prestressed by at least one force storage member (17) in a direction of the initial position, so that the at least two fastening elements (10a, 10b) can be retracted from the expanded position into the initial position by pivoting the arresting element (8) in the second pivoting direction, wherein the arresting element (8) is pivotally mounted about a pivoting axis and the at least two fastening elements (10a, 10b) are linearly displaceably supported only in a direction extending at a right angle to the pivoting axis of the arresting element (8).

2. The furniture fitting according to claim 1, **characterized in that** the at least two fastening elements (10a, 10b) are linearly displaceably supported on the furniture fitting (1) and are configured so as to be linearly displaceable on the furniture fitting (1) by pivoting the arresting element (8) in the first pivoting direction and/or in the second pivoting direction.

3. The furniture fitting according to claim 1 or 2, **characterized in that** the at least two fastening elements (10a, 10b) are adjustably supported between the expanded position and the initial position by pivoting the arresting element (8) less than 360°, preferably less than 180°.

4. The furniture fitting according to one of the claims 1 to 3, **characterized in that** the force storage member (17) includes at least one spring tongue (20) arranged on the first fastening element (10a), the spring tongue (20) being configured so as to engage the second fastening element (10b).

5. The furniture fitting according to claim 4, **characterized in that** two spring tongues (20) are arranged on the first fastening element (10a), the spring tongues (20) being configured so as to embrace the second fastening element (10b).

6. The furniture fitting according to claim 5, **characterized in that** each of the spring tongues (20) has a concave contour (21) being configured to rest against a convex counter-contour (22) of the second fastening element (10b).

7. The furniture fitting according to one of the claims 1 to 6, **characterized in that** the arresting element (8) is connected to the two fastening elements (10a, 10b) by a taper thread (16).

8. The furniture fitting according to claim 7, **characterized in that** the taper thread (16) includes at least one helical thread (14) arranged on the arresting element (8), the helical thread (14) being configured to cooperate with a mating thread (15) arranged on the fastening elements (10a, 10b).

9. The furniture fitting according to one of the claims 1 to 8, **characterized in that** the furniture fitting (1) includes at least one guide (13) for linearly displaceably supporting the fastening elements (10a, 10b).

10. The furniture fitting according to claim 9, **characterized in that** each of the fastening elements (10a, 10b) includes at least one guide element (18) configured to be guided along the guide (13) of the furniture fitting (1).

11. The furniture fitting according to one of the claims 1 to 10, **characterized in that** the at least two fastening elements (10a, 10b) are configured as half-shells.

12. The furniture fitting according to one of the claims 1 to 11, **characterized in that** the at least two fastening elements (10a, 10b), on their surfaces provided for contacting the opening (11) of the furniture part (3), have at least one holding rib (19) or a plurality of holding ribs (19).

13. The furniture fitting according to one of the claims 1 to 12, **characterized in that** the arresting element (8) has a tool receiving device (9) for pivoting the arresting element (8).

14. The furniture fitting according to one of the claims 1 to 13, **characterized in that** the furniture fitting (1) is configured as a furniture hinge, as a drawer pull-out guide (1a), as an actuating drive (1b) for furniture flaps or as a holding plate (1c) for a functional component (30), preferably a damping device for dampening a movement of a movable furniture part (3) and/or a drive device for moving a movable furniture part (3).

15. An arrangement comprising a furniture part and a furniture fitting according to one of the claims 1 to 14, **characterized in that** the furniture part (3) has an opening (11) in the form of a cylindrical bore in which the at least two fastening elements (10a, 10b) can be inserted and can be releasably arrested therein.

## Revendications

1. Garniture pour meubles (1), comprenant:
- une bride (12) pour placement sur une partie de meuble (3),
- au moins un disposif de fixation (7) pour fixation de la garniture pour meubles (1) à l'aide de la bride (12) sur la partie de meuble (3),
- dans laquelle le dispositif de fixation (7) présente au moins deux éléments de fixation (10a, 10b) pouvant être insérés dans une ouverture (11), plus particulièrement un alésage cylindrique, de la partie de meuble (3) et au moins un élément d'arrêt (8) logé de façon rotative, dans laquelle les au moins deux éléments de fixation (10a, 10b) peuvent être déplacés l'un par rapport à l'autre et par rapport à la bride (12) par une rotation de l'élément d'arrêt (8) dans un premier sens de rotation à partir d'une position de départ et ainsi peuvent être pressés dans une position d'écartement, dans laquelle les au moins deux éléments de fixation (10a, 10b) peuvent être arrêtés dans l'ouverture (11) de la partie de meuble (3), et dans laquelle les au moins deux éléments de fixation (10a, 10b) sont détachables de l'ouverture (11) par une rotation de l'élément d'arrêt (8) dans un deuxième sens de rotation,
**caractérisée en ce que** les au moins deux éléments de fixation (10a, 10b) sont précontraints par au moins un accumulateur d'énergie (17) dans le sens de la position de sortie, de sorte que les au moins deux éléments de fixation (10a, 10b) sont rétractables de la position d'écartement à la position de départ par une rotation de l'élément d'arrêt (8) dans le deuxième sens de rotation, dans laquelle l'élément d'arrêt (8) est logé de façon rotative autour d'un axe de rotation et **en ce que** les au moins deux éléments de fixation (10a, 10b) sont logés de façon déplaçable linéairement dans un sens passant perpendiculairement à l'axe de rotation de l'élément d'arrêt (8).

2. Garniture pour meubles selon la revendication 1, **caractérisée en ce que** les au moins deux éléments de fixation (10a, 10b) sont logés de façon déplaçable linéairement sur la garniture pour meubles (1) et sont déplaçables linéairement sur la garniture pour meubles (1) par une rotation de l'élément d'arrêt (8) dans le premier et / ou le deuxième sens de rotation.

3. Garniture pour meubles selon la revendication 1 ou 2, **caractérisée en ce que** les au moins deux éléments de fixation (10a, 10b) sont logés de façon réglable par une rotation de l'élément d'arrêt (8) inférieure à 360°, de préférence inférieure à 180°, entre la position d'écartement et la position de départ.

4. Garniture pour meubles selon l'une des revendications 1 à 3, **caractérisée en ce que** l'accumulateur d'énergie (17) présente au moins une languette élastique (20) disposée sur un premier élément de fixation (10a), laquelle est en prise avec le deuxième élément de fixation (10b).

5. Garniture pour meubles selon la revendication 4, **caractérisée en ce que** deux languettes élastiques (20) sont disposées sur le premier élément de fixation (10a), lesquelles entourent le deuxième élément de fixation (10b).

6. Garniture pour meubles selon la revendication 5, **caractérisée en ce que** les languettes élastiques (20) présentent à chaque fois un profil concave (21), lesquelles sont en appui dans la position de départ à chaque fois sur un contre-profil convexe (22) du deuxième élément de fixation (10b).

7. Garniture pour meubles selon l'une des revendications 1 à 6, **caractérisée en ce que** l'élément d'arrêt (8) est en liaison avec les au moins deux éléments de fixation (10a, 10b) par l'intermédiaire d'un filet conique (16).

8. Garniture pour meubles selon la revendication 7, **caractérisée en ce que** le filet conique (16) présente au moins un filetage (14) en forme de vis, disposé sur l'élément d'arrêt (8), lequel interagit avec un contre-filetage (15) disposé sur les éléments de fixation (10a, 10b).

9. Garniture pour meubles selon l'une des revendications 1 à 8, **caractérisée en ce que** la garniture pour meubles (1) présente au moins un guidage (13) pour le logement pouvant être déplacé linéairement des éléments de fixation (10a, 10b).

10. Garniture pour meubles selon la revendication 9, **caractérisée en ce que** les éléments de fixation (10a, 10b) présentent à chaque fois au moins un élément de guidage (18), lesquels sont guidés le long du guidage (13) de la garniture pour meubles (1).

11. Garniture pour meubles selon l'une des revendications 1 à 10, **caractérisée en ce que** les au moins deux éléments de fixation (10a, 10b) sont conçus comme des demi-coques.

12. Garniture pour meubles selon l'une des revendications 1 à 11, **caractérisée en ce que** les au moins deux éléments de fixation (10a, 10b) présentent au moins une ou plusieurs nervures de retenue (19) sur leur surface prévue avec le contact avec l'ouverture (11) de la partie de meuble (3).

13. Garniture pour meubles selon l'une des revendications 1 à 12, **caractérisée en ce que** l'élément d'arrêt (8) présente un logement d'outil (9) pour la torsion de l'élément d'arrêt (8).

14. Garniture pour meubles selon l'une des revendications 1 à 13, **caractérisée en ce que** la garniture pour meubles (1) est conçue comme charnière de meuble, comme glissière de guidage de tiroir (1a), comme mécanisme de commande (1b) pour abattants de meuble ou comme plaque de retenue (1c) pour une partie fonctionnelle (30), de préférence un dispositif amortisseur pour amortir un mouvement d'une partie de meuble mobile (3) et / ou un dispositif d'entraînement pour déplacer une partie de meuble mobile (3).

15. Dispositif avec une partie de meuble et avec une garniture pour meubles selon l'une des revendications 1 à 14, **caractérisé en ce que** la partie de meuble (3) présente une ouverture (11) en forme d'un alésage cylindrique, dans lequel les au moins deux éléments de fixation (10a, 10b) peuvent être insérés et peuvent y être arrêtés de façon détachable.
